# EUROPEAN PATENT APPLICATION

(11) **EP 3 287 210 A2**
(43) Date of publication of application: **28.02.2018**
(21) Application number: 17187239.3
(22) Date of filing: 22.08.2017
(51) Int. Cl.: B21J 15/02, F16B 19/08, B21J 15/36

(54) **SELF-PIERCING RIVET, ARRANGEMENT WITH A SELF-PIERCING RIVET AND METHOD FOR FORMING A JOINT**

(30) Priority: 23.08.2016 EP 16185400
(71) Applicant: Newfrey LLC, New Britain, CT 06053 (US)
(72) Inventor: BARTIG, Paul, 35394 Gießen (DE); WISSLING, Matthias, 35394 Gießen (DE)
(74) Representative: SBD IPAdmin

(57) **Abstract**

Method for forming a joint in a stack of at least two sheets (18, 20, 22) of material using a self-piercing rivet (10), arrangement and self-piercing rivet (10) comprising a rivet head (12) and a rivet shank (14) with a central shank hole (16). The rivet head (12) has a top side (24), a bottom side (26) opposite the top side and a cylindrical head exterior surface (28) of a predetermined head diameter (Dh). The rivet shank (14) has an essentially cylindrical shank exterior surface (30) and a cylindrical shank interior surface (32). The bottom side (26) and the shank interior surface (32) limits the central shank hole (16). The rivet head has along the central axis (X) between the top side and the bottom side a predetermined thickness (th). The self-piercing rivet has a predetermined axial length (La) along the central axis, and the ratio between the predetermined thickness and the predetermined axial length ratio is between 1/7 and 1/22.

## Description

The present invention relates to a self-piercing rivet for joining a stack of at least two sheets of material, to an arrangement with a self-piercing rivet and a stack of sheets and to a method for forming a joint with such a self-piercing rivet whereby the rivet is inserted into sheet material without full penetration such that a deformed end of the rivet remains encapsulated by an upset annulus of the sheet material.

More particularly, the present invention relates to a self-piercing rivet in the form of a "semihollow" self-piercing rivet.

EP 0 720 695 discloses such a semihollow rivet, which is normally described as a C rivet. This type of rivet is used on a large scale in the motor vehicle industry, but also in other technical fields. A semihollow self-piercing rivet comprises a rivet head and a rivet shank with a central shank borehole. The rivet head has a plane top side and an exterior cylindrical head and the rivet shank has a cylindrical exterior shank and a cylindrical interior shank defining a central shank borehole.

Self-piercing rivets, like C-rivets, are successful in practice. However, even though the C rivet has proved to be successful in practice, it comes up against limiting factors in particular in the case of self-piercing riveting material with low ductility such that lightweight material.

In order to solve this problem WO2014013232 discloses a method for forming a joint in a stack of at least two sheets of material, at least one of the sheets being a light metal alloy, using a self-piercing rivet that is fully hollow so as to define a bore that extends along its entire length. In practice such self-piercing rivet that is fully hollow does not allow a clean, neat junction. Besides, the delivery operation of such rivets can be difficult to implement.

It is one object of the present invention to obviate or mitigate the aforesaid disadvantages. In particular there is a need to improve the joining and the joining process of high strength light material with fasteners such as self-piercing rivets. According to a first aspect of the present invention there is provided a self-piercing rivet for joining a stack of at least two sheets of material comprising a rivet head and a rivet shank with a central shank hole, which are all designed so as to be rotationally symmetrical with reference to a central axis,
wherein the rivet head has a top side, a bottom side opposite the top side and a cylindrical head exterior surface of a predetermined head diameter,
wherein the rivet shank has an essentially cylindrical shank exterior surface and a cylindrical shank interior surface,
wherein the bottom side and the shank interior surface limits the central shank hole,
wherein the rivet head has along the central axis between the top side and the bottom side a predetermined thickness,
wherein the self-piercing rivet has a predetermined axial length along the central axis, and
wherein the ratio between the predetermined thickness and the predetermined axial length is between 1/7 and 1/22.

The predetermined axial length of the self-piercing rivet along the central axis is the length from the top side to a free end of the rivet shank.

Such a self-rivet allows a particularly good, clean and neat junction of the sheets, even of sheets having a low ductility such as high strength light metal alloys like aluminum alloys or magnesium alloys or such as CFK, aluminum die cast or magnesium die cast or the like. Such self-piercing rivets are actually hollow rivets with a thin lid. The lid avoids the material coming from the sheets to protrude from the rivet head. Such rivet allows the use of a blow feed rivet delivery system.

In some embodiments, the ratio between the predetermined thickness and the predetermined axial length is between 1/14 and 1/20.

In some embodiments, the predetermined thickness of the rivet head along the central axis between the bottom side and the top side is between 0.3 mm and 0.7 mm (millimeter) and in particular is 0.5mm. Such predetermined thickness allows the self-piercing rivet to keep all the advantages of a hollow rivet without its disadvantages.

In some embodiments, the predetermined axial length of the rivet along the central axis is greater than or equal to 7 mm. Long rivet can be used and the thickness of the sheet is not an issue. The predetermined axial length along the central axis is the length from the top side to a free end of the shank.

In some embodiments, the length of the rivet along the central axis is 7 mm or 7.5 mm or 10 mm.

In some embodiments, the head exterior surface and shank exterior surface are joined by a conical underhead chamfer and an underhead radius. The manufacture of such self-piercing rivets is easier and the joining is neater.

In some embodiments, the underhead radius is less than 1 mm (millimeter).In particular the underhead radius is 0.75 mm. This allows to reduce the setting forces.

In some embodiments, the bottom side of the rivet head and the shank interior surface are joined by a two lateral transition radii. The manufacture of such self-piercing rivets is easier.

In some embodiments, the lateral transition radii are each between 0.7 mm and 0.8 mm, and in particular 0.75mm.

In some embodiments, the diameter of the shank interior surface is between 3.2 and 2.8 mm and in particular is 3 mm.

In some embodiments, the diameter of the shank exterior surface is between 5.0 and 5.3 mm and in particular is 5.15 mm.

In some embodiments, the diameter of the rivet head is between 7.5 and 8 mm, and in particular is 7.75 mm.

In some embodiments, at least a portion of the cylindrical shank interior surface is coated by a lubricant. The lubricant allows a better setting of the rivet without increasing the setting forces. The lubricant may be of any suitable substance such as, for example, a dry film. The lubricant may comprise a binder resin and one or more suitable lubricant materials such as, for example, graphite, PTFE or phosphate. According to a second aspect of the present invention there is provided an arrangement with a self-piercing rivet such as disclosed and a stack of at least two sheets of material, wherein at least one of the sheets is a lightweight material sheet. For example, at least one of the sheets is a high strength lightweight material sheet.

In some embodiments, the self-piercing rivet forms a joint in the stack of the at least two sheets of material such that the shank of the rivet is deformed outwardly to interlock with the material.

In some embodiments, a stack of three sheets (or three layers) of material is provided.

In some embodiments, the lightweight material is an aluminum cast material or aluminum alloys and/or a plastic material and/or a CFK material and/or magnesium cast material or magnesium alloys.

In some embodiments, the third sheet can be an artificial layer used to ensure a robust junction. The third sheet can act as a "lost die".

In some embodiments, at least one of the sheet comprises a ductility of less than 12%.

According to a third aspect of the present invention there is provided a method for forming a joint in a stack of at least two sheets of material using a self-piercing rivet, comprising the steps of:
- positioning the stack of at least two sheets of material over a die;
- providing a self-piercing rivet such as disclosed;
- positioning the self-piercing rivet over the stack of at least two sheets of material at a position opposite the die;
- using a punch to set the rivet and force it into the sheet material such that it pierces the upper surface thereof and such that a shank of the rivet deforms outwardly to interlock with the material but without penetration to the die side of the material; wherein the die has a volume that is between 50% and 120% of the effective solid volume of the rivet.

It is understood under the term "effective solid volume of the rivet" the volume of the rivet being inside the stack of sheets.

In some embodiments, at least one of the sheets is a lightweight material sheet.

In some embodiments, the die has a volume that is between 70% and 120% of the effective solid volume of the rivet. The volume of the die can be reduced without prejudice for the junction.

In some embodiments, during the setting of the rivet into the sheet material, material of the sheet filled the central shank hole.

In some embodiments, the stack of at least two sheets of material comprises an extern surface, wherein the central shank hole of the self-piercing rivet protrudes from the extern surface after the setting of the rivet into the sheet material. The head of the rivet is so arranged that material from the sheets which cannot find any space left in the die can protrude or be directed in the hollow area under the head.

Other characteristics and advantages of the embodiments of the present invention will readily appear from the following description of one of its embodiments, provided as non-limitative examples, and shown in the accompanying drawings.
- Fig. 1A and Fig. 1B are a side view and a sectional view along an axis B-B of a self-piercing rivet according to a first embodiment of the invention;
- Fig. 2A and Fig. 2B are a front view and a sectional view along an axis B-B of a self-piercing rivet according to a second embodiment of the invention;
- Fig. 3 is a cross sectional views of an arrangement according to the invention;
- Fig. 4 is a schematic view of an arrangement according to the invention before the step of riveting for a stack of three sheets.

On the different figures, the same reference signs designate identical or similar elements.

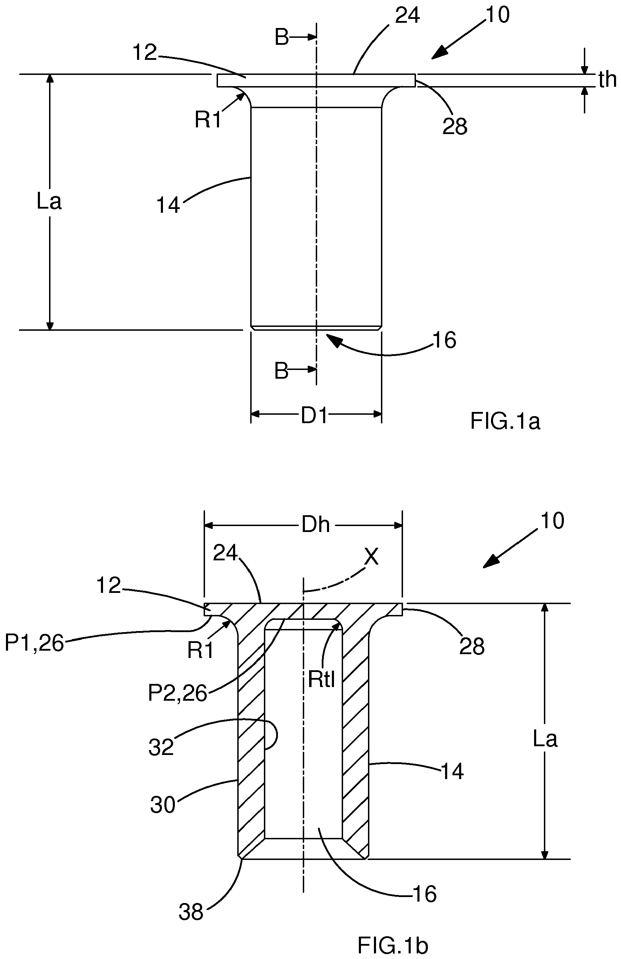

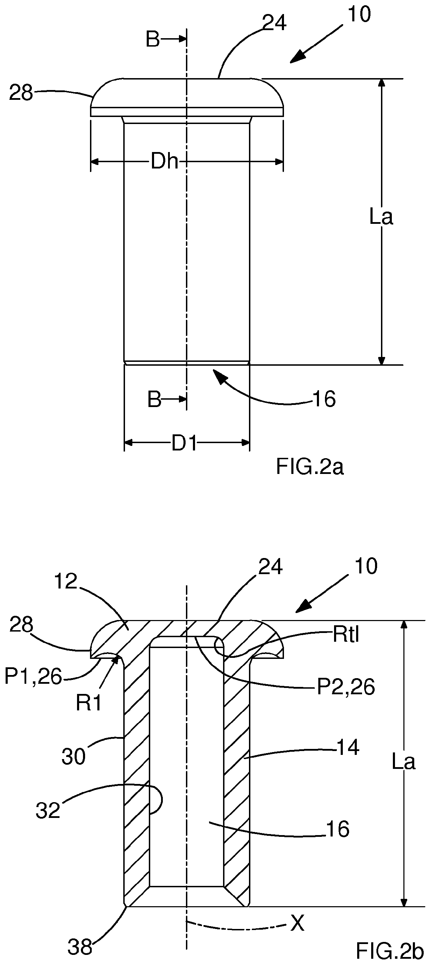

Fig. 1 and Fig. 2 show a self-piercing rivet 10 adapted to join a stack of at least two sheets 18, 20, 22 of material. The self-piercing rivet 10 comprises a rivet head 12 and a rivet shank 14. The rivet shank 14 is provided with a central shank hole 16. The rivet head 12, the rivet shank 14 and the central shank hole 16 are rotationally symmetrical with reference to a central axis X. In other words, the self-piercing rivet 10 is formed rotationally symmetrical with respect to the central axis X.

The rivet head 12 comprises a top side 24, a bottom side 26 opposite the top side 24 and a cylindrical head exterior surface 28. The rivet head 12 has a circular cross section. The cylindrical head exterior surface 28 connects the top side 24 and the bottom side 26. The cylindrical head exterior surface 28 has a predetermined head diameter Dh. The predetermined head diameter Dh of the rivet head is for example between 7.5 and 8 mm. In particular the predetermined head diameter Dh may be 7.75 mm.

The rivet head 12 comprises a predetermined thickness th along the central axis X between the bottom side 26 and the top side 24. The predetermined thickness th is between 0.3 mm and 0.7 mm. In particular the predetermined thickness th is 0.5mm. The rivet shank 14 has a cylindrical shape and extend along the central axis X. The rivet shank 14 comprises an essentially cylindrical shank exterior surface 30 and an essentially cylindrical shank interior surface 32. The bottom side 26 of the rivet head and the shank interior surface 32 delimit the central shank hole 16.

For instance, the bottom side 26 of the rivet head 12 comprises a first portion P1 and a second portion P2. The second portion P2 of the bottom side 26 and the shank interior surface 32 delimit the central shank hole 16. The central shank hole 16 is formed as a blind hole. The first portion P1 of the bottom side 26 extends outside of the central shank hole 16. The cylindrical head exterior surface 28 connects the top side 24 and the first portion P1 of the bottom side 26.

The diameter D1 of the shank exterior surface 30 (or, in other words the external diameter of the rivet shank 14) may be between 5.0 and 5.3 mm. For example the diameter D1 of the shank exterior surface is 5.15 mm.

A portion of the cylindrical shank interior surface 32 may be coated with a lubricant. The lubricant may be of any suitable substance such as, for example, a dry film. The lubricant may comprise a binder resin and one or more suitable lubricant materials such as, for example, graphite, PTFE or phosphate.

In an embodiments the entire cylindrical shank interior surface 32 is coated with a lubricant. The shank exterior surface 30 or a portion thereof may also be coated with a lubricant. The lubricants for the shank exterior surface 30 and the shank interior surface 32 may be the same or may be different.

The self-piercing rivet 10 has a predetermined axial length La along the central axis X. The predetermined axial length La of the self-piercing rivet 10 along the central axis X is the entire or complete length of the rivet from the top side 24 to the free end of the rivet shank 14.

The predetermined axial length La along the central axis X may be between greater than or equal to 7 mm. For example, the predetermined axial length La of the rivet along the central axis is 7 mm or 7.5 mm or 10 mm.

For instance, the ratio between the predetermined thickness th and the predetermined axial length La is between 1/7 and 1/22. In particular, the ratio between the predetermined thickness th and the predetermined axial length La may be between 1/14 and 1/20. Such ratio is particularly interesting since it allows the central shank hole 16 to be provided with a great volume.

As illustrated in Fig. 1a and Fig. 1b, the rivet head form a lid. In other words, the rivet head is sensibly flat. More particularly, the top side 24 of the rivet head 12 forms a plane top surface.

The head exterior surface 28 and shank exterior surface 30 are joined by a conical underhead chamfer and an underhead radius R1. For instance, the underhead radius R1 is less than 1 mm.

In the second embodiment, illustrated in Fig. 2a and Fig. 2b, the rivet head is a rounded head. The head exterior surface 28 is Fig. 2a and Fig. 2b projects from the bottom side 26, and more particularly projects from the first portion P1 of the bottom side 26.

Fig. 1b and Fig. 2b show the bottom side 26 of the rivet head 12 and the shank interior surface 32 joined by a lateral transition radius Rtl. The lateral transition radius Rtl may be between 0.7 mm and 0.8 mm.

The rivet shank 14 extends from the rivet head 12 to a free end. The free end form a cutting edge 38. The shape of the cutting edge 38 is adapted to allow the penetration of the self-piercing rivet in a workpiece or a sheet of material. As illustrated in Fig. 1b and Fig. 2b, a pointed, tapered cutting edge 38 is provided. In other embodiments (not illustrated), the cutting edge may be a blunt cutting edge. The shape of the cutting edge may depends of the kind of material to be joined.

The self-piercing rivet 10 is adapted to be punched or pressed into a workpiece or a component.

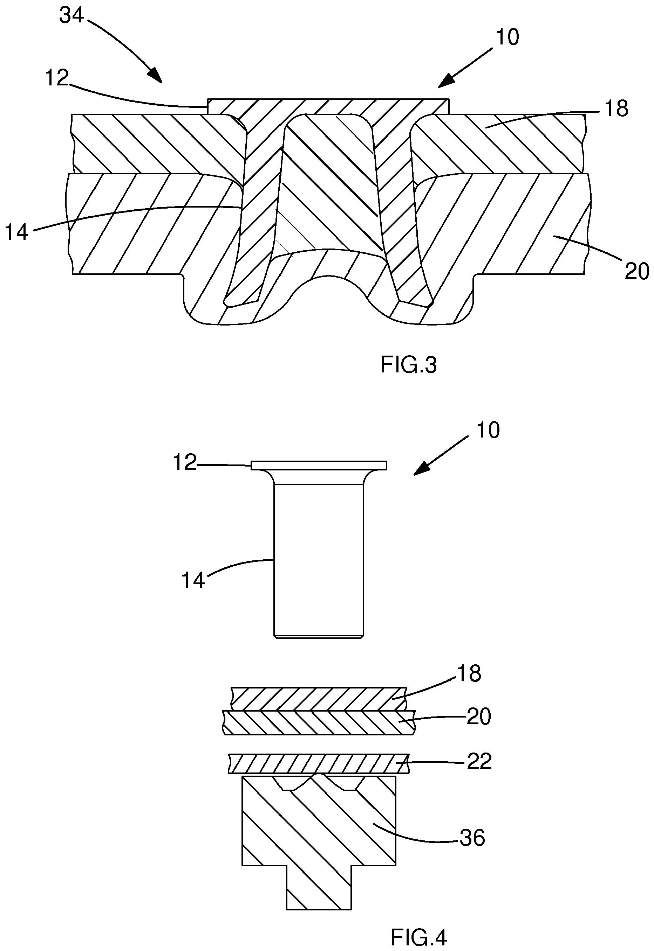

Fig. 3 shows an arrangement 34 with the self-piercing rivet 10 and a stack of two sheets 18, 20 of material. For example the first sheet 18 is adapted to receive first the cutting edge 38 of the self-piercing rivet 10 and after the setting of the rivet. The rivet head rests or faces the first sheet 18.

In others embodiments, more sheets of material may be provided. For example, three sheets 18, 20, 22 of material may be provided. As disclosed in Fig. 4, the third sheet 22 of material may be an artificial sheet used to ensure a robust junction. The third sheet may be used as a coin.

The self-piercing rivet 10 forms a joint in the stack of the at least two sheets 18, 20, 22of material such that the rivet shank 14 is deformed outwardly to interlock with the material. More particularly, the region of the cutting edge 38 is spread radially outwards, thereby creating a riveted joint. The shape of the cutting edge may be adapted with regard to the kind of material to be joined and more particularly with regard to the first sheet 18 facing the self-piercing rivet 10 during a joining operation. At least one of the sheets 18, 20, 22 of the arrangement 34 is a lightweight material sheet. More particularly, one of the sheets at least is a high strength lightweight material sheet. For example, the lightweight material is an aluminum cast material or an aluminum alloy or a plastic material or a carbon fiber reinforced (CFK) material. For instance, at least one of the sheet comprises a ductility of less than 12%.

In order to form the joint in the stack of material, the stack of at least two sheets of material are positioned over a die 36. Then, the self-piercing rivet 10 is positioned over the stack of at least two sheets of material, and opposite to the die 36 (see Fig. 4).
A punch (not illustrated) is used to set the self-piercing rivet 10 and force it into the sheets 18, 20, 22 such that it pierces the upper surface thereof and such that the rivet shank 14 deforms outwardly to interlock with the material (more particularly the second sheet of material 20 or the third sheet 22 of material) but without penetration to the die side of the material.

For example, the die 36 has a volume that is between 50% and 120% of the effective solid volume of the rivet. In some embodiments, the die may have a volume that is between 70% and 120% of the effective solid volume of the rivet.
During the setting of the rivet into the sheet material, material of the sheet fills the central shank hole. More particularly the central shank hole 16 accommodates a percentage of displaced sheet material.

The stack of at least two sheets 18, 20, 22 of material comprises an extern surface, and the central shank hole (16) of the self-piercing rivet may protrude from the extern surface after the setting of the rivet into the sheet material.

## Claims

1. Self-piercing rivet (10) for joining a stack of at least two sheets (18, 20, 22) of material comprising a rivet head (12) and a rivet shank (14) with a central shank hole (16), which are all designed so as to be rotationally symmetrical with reference to a central axis (X),
wherein the rivet head (12) has a top side (24), a bottom side (26) opposite the top side and a cylindrical head exterior surface (28) of a predetermined head diameter (Dh),
wherein the rivet shank (14) has an essentially cylindrical shank exterior surface (30) and a cylindrical shank interior surface (32),
wherein the bottom side (26) and the shank interior surface (32) limits the central shank hole (16),
wherein the rivet head has along the central axis (X) between the top side and the bottom side a predetermined thickness (th),
wherein the self-piercing rivet has a predetermined axial length (La) along the central axis,
wherein the ratio between the predetermined thickness and the predetermined axial length is between 1/7 and 1/22.

2. Self-piercing rivet (10) according to claim 1, wherein the predetermined thickness (th) of the rivet head along the central axis (X) between the bottom side and the top side is between 0.3 mm and 0.7 mm (millimeters).

3. Self-piercing rivet (10) according to any of the preceding claims, wherein the predetermined axial length (La) is greater than or equal to 7 mm.

4. Self-piercing rivet (10) according to any of the preceding claims, wherein the head exterior surface (28) and shank exterior surface (30) are joined by a conical underhead chamfer and an underhead radius (R1), and wherein the underhead radius (R1) is less than 1 mm (millimeter).

5. Self-piercing rivet (10) according to any of the preceding claims, wherein the bottom side (26) of the rivet head (12) and the shank interior surface (32) are joined by a lateral transition radius, and wherein the lateral transition radius is between 0.7 mm and 0.8 mm.

6. Self-piercing rivet (10) according to any of the preceding claims, wherein at least a portion of the cylindrical shank interior surface is coated with a lubricant.

7. Arrangement (34) with a self-piercing rivet (10) according to any of the preceding claims and a stack of at least two sheets (18, 20, 22) of material, wherein at least one of the sheets is a lightweight material sheet, and wherein the self-piercing rivet forms a joint in the stack of the at least two sheets of material such that the shank of the rivet is deformed outwardly to interlock with the material.

8. Arrangement (34) according to claim 7, wherein the lightweight material is an aluminum cast material or an aluminum alloy or a plastic material or a carbon fiber reinforced (CFK) material.

9. Arrangement (34) according to claim 7 or claim 8, wherein a stack of three sheets of material is provided, and wherein the third sheet is an artificial sheet used to ensure a robust junction.

10. Arrangement according to any of claims 7 to 9, wherein at least one of the sheet material comprises a ductility of less than 12%.

11. Method for forming a joint in a stack of at least two sheets (18, 20, 22) of material using a self-piercing rivet (10), comprising the steps of:
• positioning the stack of at least two sheets of material over a die (36);
• providing a self-piercing rivet (10) according to any one of claims 1 to 6;
• positioning the self-piercing rivet (10) over the stack of at least two sheets of material (18, 20, 22) at a position opposite the die (36);
• using a punch to set the rivet and force it into the sheets (18, 20, 22) such that it pierces the upper surface thereof and such that a shank of the rivet deforms outwardly to interlock with the material but without penetration to the die side of the material; wherein the die (36) has a volume that is between 50% and 120% of the effective solid volume of the rivet.

12. Method according to claim 11, wherein the die has a volume that is between 70% and 120% of the effective solid volume of the rivet.

13. Method according to claim 11 or 12, wherein during the setting of the rivet into the sheet material, material of the sheet fills the central shank hole (16).

14. Method according to any of claims 11 to 13, wherein the stack of at least two sheets (18, 20, 22) of material comprises an extern surface, wherein the central shank hole (16) of the self-piercing rivet protrudes from the extern surface after the setting of the rivet into the sheet material.
